# EUROPEAN PATENT SPECIFICATION

(11) **EP 4 506 494 B1**
(45) Date of publication and mention of the grant of the patent: **11.06.2025**
(21) Application number: 23190930.0
(22) Date of filing: 10.08.2023
(51) Int. Cl.: D04B 21/16, B29C 70/44, B29C 70/54, B29L 31/08, B29C 70/22

(54) **SHAPEABLE FABRIC**
FORMBARER STOFF
TISSU FAÇONNABLE

(43) Date of publication of application: 12.02.2025
(73) Proprietor: Owens Corning Intellectual Capital, LLC, Toledo, OH 43659 (US)
(72) Inventor: BLANDIN, David Marie Pierre, 73490 La Ravoire (FR); JOUANNAUX, Julien, 73000 Chambery (FR); BOUCARD, Nadege, 38480 Le Pont de Beauvoisin (FR)
(74) Representative: Haseltine Lake Kempner LLP

(56) References cited:
- CN-A- 110 093 713
- JP-A- 2019 044 285
- US-A1- 2012 302 118
- US-A1- 2020 071 859

## Description

### Field of the Invention

The present invention relates to shapeable fabrics comprising glass fibers, in particular shapeable fabrics to reinforce structural components such as wind turbine components. The present invention also relates to a process of producing said shapeable fabric. The present invention further relates to a fabric stack comprising said shapeable fabric, a shaped component comprising said fabric stack, and a process for producing said shaped component.

### Background

It is known to use glass fibers to form reinforcement fabrics to reinforce structural components such as wind turbine blades or related components (e.g., spar caps).

Structural components containing reinforcement fabrics (reinforced structural components) are often formed by stacking layers of reinforcement fabrics in a mold, filling the mold with a resin, and curing the resin to form the component. This process can be time consuming.

Wind power and the use of wind turbines have gained increased attention as the quest for alternative energy sources continues. With increasing interests in generating more energy from wind power, technological advances in the art have allowed for increased sizes of wind turbines blades. Increasing the size of wind turbine blades also increases the time required to produce the wind turbine blades. An increase in the size of wind turbine blades also increases any problems associated with infusing reinforcement fabrics used to form the wind turbine blades with resin.

US 2020/071859 A1 describes a stabilized reinforcing textile fabric. CN 110 093 713 A describes a method of reducing yarn breakage of an axial seam knitted fabric. JP 2019 044285 A describes a heat resistance multiaxial stich substrate. US 2012/302118 A1 describes a sheet for fiber-reinforced resin.

It would be desirable to provide improvements in efficiency of the production of reinforced structural components such as wind turbine blades.

### Summary of the Invention

The present invention provides a shapeable fabric as set out in claim 1, a fabric stack as set out in claim 11, a shaped component as set out in claim 12, and a process for producing a shapeable fabric as set out in claim 13.

At its most general, the present invention provides a shapeable fabric comprising: first fibers oriented in a first direction; second fibers oriented in a second direction; and an intermingled stitching yarn comprising a plurality of infusion filaments and a plurality of shaping filaments that are intermingled.

For example, described herein is a shapeable fabric comprising:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations.

In a first aspect, the present invention provides a shapeable fabric comprising:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the shaping filaments have a melting point of less than about 150 °C, and the infusion filaments have a melting point of at least about 180 °C.

In a second aspect, the present invention provides a fabric stack comprising at least two layers of a shapeable fabric described herein.

In a third aspect, the present invention provides a shaped component comprising a fabric stack described herein.

In a fourth aspect, the present invention provides a process for producing a shapeable fabric, the process comprising:
providing first fibers comprising glass fibers oriented in a first direction and second fibers comprising glass fibers oriented in a second direction, wherein the second direction is within 0 to 90 degrees of the first direction;
stitching the first fibers and second fibers together using an intermingled stitching yarn to form a stitching pattern through the shapeable fabric and to maintain the first and second fibers in their respective orientations, the intermingled stitching yarn comprising a plurality of infusion filaments and a plurality of shaping filaments that are intermingled.

In a fifth aspect, the present invention provides a process for producing a shapeable fabric, the process comprising:
providing first fibers comprising glass fibers oriented in a first direction and second fibers comprising glass fibers oriented in a second direction, wherein the second direction is within 0 to 90 degrees of the first direction;
stitching the first fibers and second fibers together using an intermingled stitching yarn to form a stitching pattern through the shapeable fabric and maintain the first and second fibers in their respective orientations, the intermingled stitching yarn comprising a plurality of infusion filaments and a plurality of shaping filaments that are intermingled, wherein the shaping filaments have a melting point of less than about 150 °C, and the infusion filaments have a melting point of at least about 180 °C.

In a sixth aspect, the present invention provides a process for producing a shapeable fabric, the process comprising:
providing first fibers comprising glass fibers oriented in a first direction and second fibers comprising glass fibers oriented in a second direction, the second direction being within 0 to 90 degrees of the first direction;
stitching the first fibers and second fibers together using an intermingled stitching yarn to form a stitching pattern through the shapeable fabric and maintain the first and second fibers in their respective orientations, the intermingled stitching yarn comprising a plurality of infusion filaments and a plurality of shaping filaments that are intermingled, wherein the infusion filaments constitute from about 15 wt.% to about 85 wt.% of the intermingled stitching yarn, and the shaping filaments constitute from about 15 wt.% to about 85 wt.% of the intermingled stitching yarn.

In a seventh aspect, the present invention provides a process for producing a shaped component, the process comprising:
stacking a plurality of layers of a shapeable fabric as described herein to provide a fabric stack;
shaping the fabric stack; and
heating the fabric stack at a temperature up to about 160 °C.

The present inventors have found that the present invention provides a shapeable fabric which provides improvements in the efficiency of the production of reinforced structure components such as wind turbine blades and related components. This is because these shapeable fabrics can be stacked and shaped (i.e., pre-shaped) before being incorporated into a reinforced structural component. The provision of the shapeable fabrics described herein has been found to surprisingly increase the speed at which a reinforced structural component, e.g., a wind turbine blade, can be produced. Even more surprisingly, the present inventors have found that the shapeable fabrics described herein can provide improvements in the efficiency of the production of reinforced structural components, e.g., wind turbine blades, without detrimentally effecting the infusion or mechanical properties of the fabrics or the final components. Overall, the shapeable fabrics described herein can lead to an increase in productivity and a reduction in non-conformance during lay up of fabrics in the production of structural components.

There have been attempts to produce a shapeable fabric that has both good mechanical properties and good infusion properties so that the shapeable fabric may be used in the production of wind turbine blades. However, incorporating shapeable properties into fabrics useful in the production of structural components, such as in wind turbine blades, and the fabric still exhibiting good infusion properties, good mechanical properties (including mechanical properties of a composite material formed from the shapeable fabric) and good drapeability has proven difficult.

The present inventors have found that using an intermingled stitching yarn comprising, comprising, consisting essentially of, or consisting of a plurality of infusion filaments and a plurality of shaping filaments that are intermingled, in the production of a shapeable fabric surprisingly provides shapeable fabrics exhibiting good infusion and mechanical properties. Surprisingly, the inventors also found that composite articles produced from such shapeable fabrics exhibit good mechanical properties. Surprisingly, the inventors found that the use of an intermingled stitching yarn as described herein reduces the production cycle time of the fabrics and reduces the presence of wrinkles and/or resin pockets after infusion with resin. Even more surprisingly, employing the intermingled stitching yarn described herein has been found to improve infusion properties of the fabric compared to previous attempts to provide shapeable fabric. Without being bound by theory, the improved infusion properties may be the result of the intermingled arrangement of the plurality of infusion filaments and the plurality of shaping filaments allowing more homogenous repartition of the shaping and infusion components over the fabrics.

Furthermore, providing a shapeable fabric comprising the intermingled stitching yarn described herein was found by the present inventors to reduce fabric stiffness and increase drapeability compared to previous attempts to provide a shapeable fabric. The use of an intermingled stitching yarn with a plurality of shaping filaments having a melting point of less than about 150 °C (for example, less than about 120 °C or less than about 100 °C) was found to also be beneficial, as a lower activation temperature, and therefore amount of energy, may be used during production of the shapeable fabric.

The invention includes the combination of the aspects and preferred features described herein except where such a combination is clearly impermissible or expressly avoided.

### Brief Description of the Figures

Embodiments and experiments illustrating the principles of the invention will now be discussed with reference to the accompanying figures in which:
Figure 1 is a schematic diagram illustrating a cross-section through an intermingled stitching yarn comprising infusion filaments and a plurality of shaping filaments that are intermingled;
Figure 2 is a graph showing infusion properties for unidirectional fabrics described in the examples section below;
Figure 3 is a graph showing infusion properties for biaxial fabrics described in the examples section below;
Figure 4a is a graph showing mechanical properties for unidirectional fabrics described in the examples section below;
Figure 4b is a graph showing mechanical properties for unidirectional fabrics described in the examples section below;
Figure 5 is a graph showing mechanical properties for biaxial fabrics described in the examples section below;
Figure 6 is a graph showing fatigue properties for unidirectional fabrics described in the examples section below;
Figure 7 is a graph showing fatigue properties for unidirectional fabrics described in the examples section below;
Figure 8 is a graph showing mechanical properties for biaxial fabrics described in the examples section below.

### Detailed Description

Aspects and embodiments of the present invention will now be discussed. Further aspects and embodiments will be apparent to those skilled in the art.

Described herein is a shapeable fabric comprising: first fibers comprising glass fibers oriented in a first direction; second fibers comprising glass fibers orientated in a second direction; and an intermingled stitching yarn comprising a plurality of infusion filaments and a plurality of shaping filaments that are intermingled, wherein the second direction is within 0 to 90 degrees of the first direction and the intermingled stitching yarn forms a stitching pattern through the shapeable fabric and maintains the first and second fibers in their respective orientations.

The first fibers of the shapeable fabric may be referred to as warp fibers. The first fibers may be arranged side by side and substantially parallel to one another. The second fibers of the shapeable fabric may be referred to as weft fibers. The second fibers may be arranged side by side and substantially parallel to one another.

In embodiments, the shapeable fabric comprises first fibers oriented in a first direction and second fibers oriented in a second direction. In embodiments, the second direction is within 0 to 90 degrees of the first direction, for example, wherein the first direction and the second direction are different to one another. In embodiments, the second direction is within about 10 degrees to about 90 degrees of the first direction, within about 20 degrees to about 90 degrees of the first direction, within about 30 degrees to about 90 degrees of the first direction, within about 40 degrees to about 90 degrees of the first direction, within about 45 degrees to about 90 degrees of the first direction, within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction.

In embodiments, the shapeable fabric may be a unidirectional fabric or a multiaxial fabric such as a biaxial fabric.

In embodiments, the shapeable fabric is a unidirectional fabric. A unidirectional fabric can comprise second fibers oriented in a second direction wherein the second direction is oriented in a direction greater than 0 degrees of the first direction. For example, a unidirectional fabric may comprise first fibers oriented in a first direction and second fibers oriented in a second direction, wherein the second direction is from about 0 to 90 degrees of the first direction, for example, within about 45 degrees to about 90 degrees of the first direction, within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction. In a unidirectional fabric the first fibers may constitute greater than about 90 wt.% of the shapeable fabric, for example greater than about 92 wt.% of the shapeable fabric, or at least about 95 wt.% of the shapeable fabric. In a unidirectional fabric the second fibers may constitute up to about 10 wt.%, for example up to about 8 wt.%, or up to about 5 wt.% of the shapeable fabric. In a unidirectional fabric, the second direction may be substantially perpendicularly to the first direction, the first fibers may constitute greater than 92 wt.% of the shapeable fabric, and the second fibers may constitute up to about 8 wt.% of the shapeable fabric. In embodiments, the shapeable fabric is a unidirectional fabric, the second direction is substantially perpendicularly to the first direction and the weight ratio of first fibers to second fibers is in the range of 15:1 to 25:1.

In embodiments, the shapeable fabric is a biaxial fabric. In a biaxial fabric the second direction may be within about 20 degrees to about 90 degrees of the first direction, for example the second direction may be within about 30 degrees to about 90 degrees of the first direction, the second direction may be within about 40 degrees to about 90 degrees of the first direction, the second direction may be within about 45 degrees to about 90 degrees of the first direction, the second direction may be within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction. In embodiments, the shapeable fabric is a biaxial fabric wherein the second direction is around 25 to 75 degrees of the first direction, for example about 45 degrees of the first direction. In embodiments, the shapeable fabric is a biaxial fabric wherein the second direction is at least 45 degrees of the first direction. In embodiments, the shapeable fabric is a biaxial fabric, and the second direction is substantially perpendicular to the first direction. In embodiments where the shapeable fabric is a biaxial fabric the second fibers constitute greater than 5 wt.% of the shapeable fabric. In embodiments where the shapeable fabric is a biaxial fabric the second fibers may constitute at least about 10 wt.% of the shapeable fabric, for example at least about 15 wt.%, at least about 20 wt.%, or at least about 25 wt.% of the shapeable fabric. In embodiments, the remaining fiber weight of the shapeable fabric is made up of the first fibers.

In embodiments, at least the first fibers or the second fibers comprise, consist essentially of, or consist of glass fibers.

In embodiments, both the first fibers and the second fibers comprise, consist essentially of, or consist of glass fibers.

The term "glass fibers" is used herein to refer to a plurality of continuous glass filaments (the term "continuous" as used here is used to refer to a fiber/filament that has a length many times longer than its diameter, for example at least about 5000 times longer than its diameter, e.g., at least about 10 000 times longer than its diameter). The glass fibers used in the fabrics described herein may be provided as glass fiber strands (or tows). The glass fibers may be formed by a continuous manufacturing process in which molten glass passes through the holes of a "bushing," the streams of molten glass thereby formed are solidified into filaments/fibers. The glass fibers described herein (e.g., the glass fibers of the first and/or second fibers) may include a sizing on their surface, e.g., a sizing applied on the glass fibers during formation of the fibers. The sizing can include components such as a film former, lubricant, coupling agent (to promote compatibility between the glass fibers and the resin used to form a composite article comprising the hybrid fabric described herein), etc. that facilitate formation of the glass fibers and/or use thereof in a matrix resin. In some embodiments, the glass fibers of first and/or second fibers include a polyester compatible sizing or an epoxy compatible sizing.

The term "glass fiber strand" or "glass fiber tow" as used herein, refers to a bundle of continuous glass filaments. In embodiments the glass fiber strands or tows are bundles of untwisted glass filaments.

In embodiments, glass fiber strands or glass fiber tows are provided from glass fiber direct rovings. Glass fiber direct rovings are made up of a bundle of continuous untwisted (i.e., substantially parallel, or parallel) glass filaments bonded (as the glass filaments are formed) into a single strand and wound onto a bobbin.

Any suitable glass reinforcing fibers may be employed as the first or second fibers, for example, fibers made from E glass, E-CR glass (such as Advantex^{™} glass fibers available from Owens Corning), C glass, H glass, S glass, and AR glass types can be used.

In embodiments, the glass fibers referred to herein (for example, the first fibers which may be glass fibers and/or the second fibers that may be glass fibers) have a linear mass density in the range of about 50 Tex to about 5000 Tex, for example about 200 Tex to about 4800 Tex, about 300 Tex to about 2500 Tex, about 300 Tex to about 2400 Tex, or about 600 Tex to about 1200 Tex.

In embodiments, the shapeable fabric comprises additional fibers in addition to glass fibers. Examples of other fibers which may be included in the shapeable fabric include carbon fibres and/or polymer fibers such as PET.

The term "carbon fibers" used herein to refer to a plurality of continuous carbon filaments (the term "continuous" as used here is used to refer to a fiber/filament that has a length many times longer than its diameter, for example at least about 5000 times longer than its diameter, e.g., at least about 10 000 times longer than its diameter). The carbon fibers used in the fabrics described herein may be provided as carbon fiber tows (or strands) which are bundles of continuous carbon filaments. The carbon fibers described herein (e.g., the carbon fibers of the first and/or second fibers) may include a sizing on their surface, e.g., a sizing applied on the carbon fibers during formation of the fibers. The sizing can include components such as a film former, lubricant, coupling agent (to promote compatibility between the carbon fibers and the resin used to form a composite article comprising the hybrid fabric described herein), etc. that facilitate formation of the carbon fibers and/or use thereof in a matrix resin. In some embodiments, the carbon fibers include a polyester compatible sizing or an epoxy compatible sizing.

In embodiments, the carbon fibers have a linear mass density in the range of about 100 Tex to about 5000 Tex, for example about 200 Tex to about 5000 Tex, about 400 Tex to about 5000 Tex, about 600 Tex to about 5000 Tex, about 800 Tex to about 5000 Tex, about 100 Tex to about 4800 Tex, about 200 Tex to about 4800 Tex, about 400 Tex to about 4800 Tex, about 600 Tex to about 4800 Tex, about 800 Tex to about 4800 Tex, about 100 Tex to about 2400 Tex, about 200 Tex to about 2400 Tex, about 400 Tex to about 2400 Tex, about 100 Tex to about 2000 Tex, about 200 Tex to about 2000 Tex, about 400 Tex to about 2000 Tex, about 600 Tex to about 2000 Tex, about 800 Tex to about 2000 Tex, or about 1000 Tex to about 1200 Tex.

In embodiments, carbon fibers (where present) are provided by carbon fiber tows (strands of carbon fibers). In embodiments, the carbon fibers tows have a size in the range of 6K to 50K, for example 6K to 24K, or 6K to 12K. For example, the first fibers may be fed from one or more carbon fiber tows having a size in the range of 6K to 50K, for example 6K to 24K, or 6K to 12K. The nomenclature #K means that the carbon tow is made up of # x 1,000 individual carbon filaments, i.e., a carbon fiber tow having a size of 6K is made up of approximately 6000 carbon fiber filaments/fibers.

The shapeable fabric is a non-crimp fabric, the first and second fibers are maintained in their respective orientations by the intermingled stitching yarn (as opposed to the first and second fibers being woven together, i.e., a non-crimp fabric is a non-woven fabric), or by a combination of the intermingled stitching yarn and the infusion stitching yarn described herein.

In embodiments, the shapeable fabric has an areal weight in the range of about 200 g/m² to about 2500 g/m², for example about 300 g/m² to about 2500 g/m², for example about 300 g/m² to about 2000 g/m², for example about 500 g/m² to about 1500 g/m², for example about 500 g/m² to about 1300 g/m², for example about 1300 g/m² to about 2500 g/m². The areal weight of the shapeable fabric may be determined according to ISO 3374.

### Intermingled stitching yarn

The intermingled stitching yarn employed in the shapeable fabrics described herein comprises, consists essentially of, or consists of a plurality of infusion filaments and a plurality of shaping filaments that are intermingled.

Intermingled may be referred to as "commingled" within the art, the terms are often used interchangeably to describe a yarn formed from the mixing of different filaments.

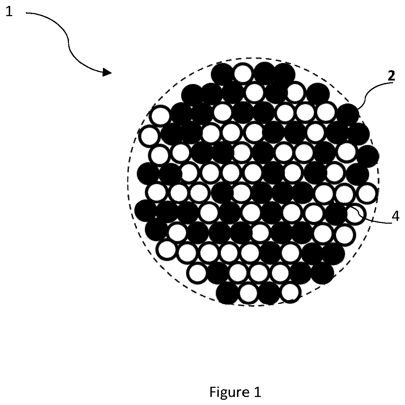

Figure 1 shows a schematic diagram of a cross-section through an intermingled stitching yarn 1 composed of two different types of filament, for example shaping filaments 2 and infusion filaments 4, that have been intermingled to form a continuous yarn. In the present invention, the intermingled stitching yarn comprises a plurality of infusion filaments and a plurality of shaping filaments intermingled to form a continuous intermingled stitching yarn. The term intermingled stitching yarn is used to herein to describe a plurality of different filaments that are randomly mixed together to form a continuous yarn with a randomised cross section, for example, as shown in Figure 1. The distribution of the different filaments is not pre-determined, such as in a co-twisted or core-spun yarn and is instead referred to herein as "randomised".

The intermingled stitching yarn may be prepared using air jets to blend the two types of filament together at a filament level. In this methodology, air causes the filaments to be intertwined and intermingled with each other to form a compact section. This compact section may be referred to as an interlacing point, or a nipped section. The remaining non-compact sections may be referred to as open section.

In embodiments, the plurality of infusion filaments constitutes from about 15 wt.% to about 85 wt.% of the intermingled stitching yarn, and the plurality of shaping filaments constitutes from about 15 wt.% to about 85 wt.% of the intermingled stitching yarn; for example, the plurality of infusion filaments constitutes from about 15 wt.% to about 75 wt.% of the intermingled stitching yarn, and the plurality of shaping filaments constitutes from about 25 wt.% to about 85 wt.% of the intermingled stitching yarn; the plurality of infusion filaments constitutes from about 15 wt.% to about 80 wt.% of the intermingled stitching yarn, and the plurality of shaping filaments constitutes from about 20 wt.% to about 85 wt.% of the intermingled stitching yarn; the plurality of infusion filaments constitutes from about 20 wt.% to about 75 wt.% of the intermingled stitching yarn, and the plurality of shaping filaments constitutes from about 25 wt.% to about 80 wt.% of the intermingled stitching yarn; the plurality of infusion filaments constitutes from about 25 wt.% to about 75 wt.% of the intermingled stitching yarn, and the plurality of shaping filaments constitutes from about 25 wt.% to about 75 wt.% of the intermingled stitching yarn; the plurality of infusion filaments constitutes from about 20 wt.% to about 60 wt.% of the intermingled stitching yarn, and the plurality of shaping filaments constitutes from about 40 wt.% to about 80 wt.% of the intermingled stitching yarn; the plurality of infusion filaments constitutes from about 25 wt.% to about 60 wt.% of the intermingled stitching yarn, and the plurality of shaping filaments constitutes from about 40 wt.% to about 75 wt.% of the intermingled stitching yarn; the plurality of infusion filaments constitutes from about 40 wt.% to about 75wt.% of the intermingled stitching yarn, and the plurality of shaping filaments constitutes from about 25 wt.% to about 60 wt.% of the intermingled stitching yarn; the plurality of infusion filaments constitutes from about 25 wt.% to about 50 wt.% of the intermingled stitching yarn, and the plurality of shaping filaments constitutes from about 50 wt.% to about 75 wt.% of the intermingled stitching yarn; the plurality of infusion filaments constitutes from about 35 wt.% to about 45 wt.% of the intermingled stitching yarn, and the plurality of shaping filaments constitutes from about 55 wt.% to about 65 wt.% of the intermingled stitching yarn; the plurality of infusion filaments constitutes from about 55 wt.% to about 65 wt.% of the intermingled stitching yarn, and the plurality of shaping filaments constitutes from about 35 wt.% to about 45 wt.% of the intermingled stitching yarn; or the plurality of infusion filaments constitutes from about 50 wt.% to about 75 wt.% of the intermingled stitching yarn, and the plurality of shaping filaments constitutes from about 25 wt.% to about 50 wt.% of the intermingled stitching yarn.

In embodiments, the intermingled stitching yarn constitutes from about 0.1 wt.% to about 20 wt.% of the shapeable fabric; for example, from about 0.1 wt.% to about 15 wt.% of the shapeable fabric; from about 0.1 wt.% to about 10 wt.% of the shapeable fabric; from about 0.1 wt.% to about 5 wt.% of the shapeable fabric; from about 0.1 wt.% to about 3 wt.% of the shapeable fabric; from about 0.25 wt.% to about 15 wt.% of the shapeable fabric; from about 0.25 wt.% to about 10 wt.% of the shapeable fabric; from about 0.25 wt.% to about 5 wt.% of the shapeable fabric; from about 0.25 wt.% to about 3 wt.% of the shapeable fabric; from about 0.5 wt.% to about 15 wt.% of the shapeable fabric; from about 0.5 wt.% to about 10 wt.% of the shapeable fabric; from about 0.5 wt.% to about 5 wt.% of the shapeable fabric; or from about 0.5 wt.% to about 3 wt.% of the shapeable fabric.

In embodiments, the plurality of shaping filaments of the intermingled stitching yarn constitutes from about 0.25 wt.% to about 4 wt.% of the shapeable fabric; and/or the plurality of infusion filaments of the intermingled stitching yarn constitutes from about 0.25 wt.% to about 4 wt.% of the shapeable fabric.

The intermingled stitching yarn maintains the first and second fibers in their respective orientations. The intermingled stitching yarn can be described as forming a stitching pattern through the fabric, for example, such that the intermingled stitching yarn maintains the first and second fibers in their respective orientations. The term "stitching pattern" is used herein to refer to a pattern formed by stitches through the fabric. A stitching pattern may be made up of at least one row of stitches. Rows of stitches may be parallel, or substantially parallel to one another. A stitching pattern may be formed by one or more stitching yarns (for example an intermingled stitching yarn; or an intermingled stitching yarn and an infusion stitching yarn). The one or more stitching yarns may work together to form a row of stitches of the stitching pattern. Alternatively, the one or more stitching yarns may each individually form a row of stitch on the fabric, and together make up the stitching pattern.

In embodiments, the stitching pattern is selected from a diamond stitch, a pillar stitch, a tricot stitching pattern, a symmetric double tricot stitching pattern, an asymmetric double tricot stitching pattern, a symmetric stitching pattern, and an asymmetric stitching pattern. In embodiments, the intermingled stitching yarn forms a stitching pattern through the fabric, the stitching pattern being a tricot stitching pattern. In embodiments, the stitching pattern of the intermingled stitching yarn is formed from stitches having a stich length in the range of about 2 mm to about 7 mm, for example about 3 mm to about 5 mm.

In embodiments, the stitching pattern of the intermingled stitching yarn has a defined stitching gauge in the range of 3 to 15 yarns per inch (1 inch = 2.54 cm), for example about 5 to 10 yarns per inch (1 inch = 2.54 cm), where the stitching gauge is the number of lines of yarn per inch, each line of yarn forming a line of stiches, the lines of stitches making up the stitching pattern per inch of shapeable fabric.

In embodiments, the intermingled stitching yarn has a linear density of about 50 dTex to about 600 dTex, for example a linear density in the range of about 70 dTex to about 500 dTex, a linear density in the range of about 100 dTex to about 400 dTex, or a linear density in the range of about 250 dTex to about 300 dTex.

### Infusion filament

In embodiments, the infusion filaments of the intermingled stitching yarn have a melting point of at least about 180 °C, for example at least about 200 °C, or at least about 220 °C. In embodiments, the infusion filaments of the intermingled stitching yarn have a melting point in the range of about 180 °C to about 400 °C, 200 °C to about 350 °C, or about 220 °C to about 330 °C. In some embodiments, the infusion filaments of the intermingled stitching yarn have a melting point around 250 °C. The melting point of the infusion filaments may be determined by differential scanning calorimetry (i.e., the temperature of the peak heat flow obtained by DSC analysis). The melting point of the infusion filaments may be determined using differential scanning calorimetry (DSC) according to EN ISO 11357-3:2018 (determination of temperature and enthalpy of melting and crystallization). The melting point of the infusion filaments may be determined using differential scanning calorimetry (DSC) according to EN ISO 11357-3:2018 (determination of temperature and enthalpy of melting and crystallization) wherein the melting point is determined as the value provided on the second heating cycle. The melting point of the infusion filaments may be determined according to the EN ISO 11357-3:2018 test method by heating the infusion filaments under an air flow of 80 mL/min at a heating rate of 10K/min, heating from - 60 °C to 400 °C. In embodiments, the melting point of the infusion filaments may be determined according to the EN ISO 11357-3:2018 test method by heating the infusion filament under an air flow of 80 mL/min at a heating rate of 10K/min, heating from - 60 °C to 400 °C and then holding for 5 mins at 300 °C before cooling from 400 °C to - 60 °C at a cooling rate of 10K/min and then holding for 5 mins at - 60 °C before heating from - 60 °C to 400 °C again at a heating rate of 10K/min and the melting point being determined as the value provided on the second heating cycle.

In embodiments, the infusion filaments comprise, consist essentially of, or consist of polyester filaments having a melting point in the range of about 180 °C to about 350 °C, for example about 200 °C to about 350 °C. In one embodiment, the infusion filaments may comprise, or may consist essentially of, or may consist of polyethylene terephthalate.

In embodiments, each infusion filament of the intermingled stitching yarn has a linear mass density in the range of about 1 dTex to about 10 dTex, for example a linear mass density in the range of about 2 dTex to about 8 dTex, or a linear mass density in the range of about 3 dTex to about 7 dTex.

In embodiments, each infusion filament of the plurality of infusion filaments has a melting point in the range of about 200 °C to about 350 °C and a linear mass density in the range of about 1 dTex to about 10 dTex (for example, a linear mass density in the range of about 2 dTex to about 8 dTex, about 3 dTex to about 7 dTex, or about 3 dTex to about 3.5 dTex).

### Shaping filament

In embodiments, the shaping filaments of the intermingled stitching yarn have a melting point of less than about 150 °C, for example less than about 140 °C, less than about 130 °C, less than about 120 °C, less than about 110 °C, less than about 100 °C less than about 90 °C, less than about 80 °C, less than about 75 °C, less than about 70 °C, or less than about 65 °C. In embodiments, the shaping filaments of the intermingled stitching yarn have a melting point in the range of about 40 °C to about 150 °C, for example about 40 °C to about 140 °C, about 40 °C to about 130 °C, about 40 °C to about 120 °C, about 50 °C to about 100 °C, about 50 °C to about 90 °C, about 55 °C to about 75 °C, or about 55 °C to about 65 °C. The melting point of each shaping filament may be determined by differential scanning calorimetry (i.e., the temperature of the peak heat flow obtained by DSC analysis). The melting point of the shaping filament may be determined using differential scanning calorimetry (DSC) according to EN ISO 11357-3:2018 (determination of temperature and enthalpy of melting and crystallization). The melting point of the shaping filament may be determined using differential scanning calorimetry (DSC) according to EN ISO 11357-3:2018 (determination of temperature and enthalpy of melting and crystallization) wherein the melting point is determined as the value provided on the second heating cycle. The melting point of the shaping filament may be determined according to the EN ISO 11357-3:2018 test method by heating the shaping filament under an air flow of 80 mL/min at a heating rate of 10K/min, heating from - 60 °C to 170 °C. In embodiments, the melting point of the shaping filament may be determined according to the EN ISO 11357-3:2018 test method by heating the shaping filament under an air flow of 80 mL/min at a heating rate of 10K/min, heating from - 60 °C to 170 °C and then holding for 5 mins at 170 °C before cooling from 170 °C to - 60 °C at a cooling rate of 10K/min and then holding for 5 mins at - 60 °C before heating from - 60 °C to 170 °C again at a heating rate of 10K/min and the melting point being determined as the value provided on the second heating cycle.

In embodiments, the shaping filaments comprise, or are composed of polyester or polyamide. For example, in one embodiment, the shaping filaments are composed of polycaprolactone. For example, in one embodiment, the shaping filaments are composed of a copolyamide. For example, the shaping filaments may be selected from polyester filaments and polyamide filaments. For example, the shaping filaments may be selected from polyester filaments and polyamide filaments having a melting point in the range of about 40 °C to about 150 °C, for example about 40 °C to about 140 °C, about 40 °C to about 130 °C, about 40 °C to about 120 °C, about 50 °C to about 100 °C, about 50 °C to about 90 °C, about 55 °C to about 75 °C, or about 55 °C to about 65 °C.

In embodiments, each shaping filament of the intermingled stitching yarn has a linear density in the range of about 1 dTex to about 10 dTex, for example a linear density in the range of about 2 dTex to about 8 dTex, a linear density in the range of about 3 dTex to about 7 dTex, or a linear density in the range of about 4 dTex to about 6 dTex.

In embodiments, the shaping filaments comprise, consist essentially of, or consist of polycaprolactone filaments having a melting point in the range of about 55 °C to about 65 °C. In embodiments, the shaping filaments comprise, consist essentially of, or consist of polycaprolactone filaments having a linear density in the range of about 4 dTex to about 6 dTex.

### Shapeable Fabric

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the shaping filaments have a melting point of less than about 150 °C, and the infusion filaments have a melting point of at least about 180 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the shaping filaments have a melting point of less than about 120 °C, and the infusion filaments have a melting point of at least about 200 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the shaping filaments have a melting point of less than about 100 °C, and the infusion filaments have a melting point of at least about 200 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the shaping filaments have a melting point of less than about 150 °C, and the infusion filaments have a melting point of at least about 200 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the infusion filaments constitute from about 15 wt.% to about 85 wt.% of the intermingled stitching yarn, and the shaping filaments constitute from about 15 wt.% to about 85 wt.% of the intermingled stitching yarn, and
wherein the shaping filaments have a melting point of less than about 150 °C, and wherein the infusion filaments have a melting point of at least about 180 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn maintains forms a stitching pattern through the shapeable fabric and the first and second fibers in their respective orientations, and
wherein the infusion filaments constitute from about 15 wt.% to about 75 wt.% of the intermingled stitching yarn, and the shaping filaments constitute from about 25 wt.% to about 85 wt.% of the intermingled stitching yarn, and
wherein the shaping filaments have a melting point of less than about 120 °C, and wherein the infusion filaments have a melting point of at least about 200 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the infusion filaments constitute from about 25 wt.% to about 75 wt.% of the intermingled stitching yarn, and the shaping filaments constitute from about 25 wt.% to about 75 wt.% of the intermingled stitching yarn, and
wherein the shaping filaments have a melting point of less than about 120 °C, and wherein the infusion filaments have a melting point of at least about 200 °C.

In embodiments, the shapeable fabric comprises:
first fibers comprising glass fibers oriented in a first direction;
second fibers comprising glass fibers oriented in a second direction; and
an intermingled stitching yarn comprising a plurality of infusion filaments and a plurality of shaping filaments that are intermingled,
wherein the second direction is within 0 to 90 degrees of the first direction, and the intermingled stitching yarn forms a stitching pattern through the shapeable fabric and maintains the first and second fibers in their respective orientations, and
wherein the infusion filament constitutes from about 30 wt.% to about 50 wt.% of the intermingled stitching yarn, and the shaping filament constitutes from about 50 wt.% to about 70 wt.% of the intermingled stitching yarn, and
wherein the shaping filaments have a melting point of less than about 120 °C, and wherein the infusion filaments have a melting point of at least about 200 °C.

In embodiments the shapeable fabric further comprises an infusion stitching yarn. In embodiments, an infusion stitching yarn is used to form a stitching pattern through the shapeable fabric. A stitching pattern may be formed by stitches through the fabric. A stitching pattern may be formed from at least one row of stitches. Rows of stitches may be parallel, or substantially parallel to one another. A stitching pattern may be formed solely by the infusion stitching yarn, or it may be formed by the infusion stitching yarn and the intermingled stitching yarn together. The infusion yarn may be used simultaneously alongside the intermingled stitching yarn to form a row of stitching. Alternatively, each yarn may individually form a row of stitching on the fabric, and together form a stitching pattern.

In embodiments, the infusion stitching yarn comprises, consists essentially of, or consists of a material suitable for use as the plurality of infusion filaments. In embodiments, the infusion stitching yarn is a polyester stitching yarn. For example, in one embodiment, the infusion stitching yarn may be composed of polyethylene terephthalate. In one embodiment, the infusion stitching yarn may be formed from the same material used for the plurality of infusion filaments. For example, the infusion stitching yarn may be composed of polyethylene terephthalate, and the infusion filaments may comprise, or may be composed of polyethylene terephthalate. In embodiments, the infusion stitching yarn may be formed of a different material to the infusion filaments of the intermingled stitching yarn. In embodiments, the infusion stitching yarn has a linear density in the range of about 50 dTex to about 200 dTex, for example a linear density in the range of about 70 dTex to about 200 dTex, a linear density in the range of about 70 dTex to about 175 dTex, or a linear density in the range of about 76 dTex to about 167 dTex.

In embodiments, the infusion stitching yarn has a melting point of at least about 180 °C, for example at least about 200 °C, or at least about 220 °C. In embodiments, the infusion stitching yarn has a melting point in the range of about 180 °C to about 400 °C, for example 200 °C to about 350 °C, or about 220 °C to about 330 °C. In some embodiments, the infusion stitching yarn has a melting point around 250 °C. The melting point of the infusion stitching yarn may be determined by differential scanning calorimetry (i.e., the temperature of the peak heat flow obtained by DSC analysis). The melting point of the infusion stitching yarn may be determined using differential scanning calorimetry (DSC) according to EN ISO 11357-3:2018 (determination of temperature and enthalpy of melting and crystallization). The melting point of the infusion stitching yarn may be determined using differential scanning calorimetry (DSC) according to EN ISO 11357-3:2018 (determination of temperature and enthalpy of melting and crystallization) wherein the melting point is determined as the value provided on the second heating cycle. The melting point of the infusion stitching yarn may be determined according to the EN ISO 11357-3:2018 test method by heating the infusion stitching yarn under an air flow of 80 mL/min at a heating rate of 10K/min, heating from - 60 °C to 400 °C. In embodiments, the melting point of the infusion stitching yarn may be determined according to the EN ISO 11357-3:2018 test method by heating the infusion stitching yarn under an air flow of 80 mL/min at a heating rate of 10K/min, heating from - 60 °C to 400 °C and then holding for 5 mins at 400 °C before cooling from 400 °C to - 60 °C at a cooling rate of 10K/min and then holding for 5 mins at - 60 °C before heating from - 60 °C to 400 °C again at a heating rate of 10K/min and the melting point being determined as the value provided on the second heating cycle.

In embodiments, the infusion stitching yarn comprises, consists essentially of, or consists of a polyester stitching yarn having a melting point in the range of about 180 °C to about 400 °C, for example about 200 °C to about 350 °C, and a linear density in the range of about 50 dTex to about 200 dTex.

In embodiments, the weight ratio of infusion stitching yarn to stitching yarn used in the shapeable fabric is in the range of from about 0.25:1 to about 2:1, for example from about 0.33:1 to about 2:1; from about 0.5:1 to about 2:1; from about 0.66:1 to about 2:1; from about 0.75:1 to about 2:1; from about 1:1 to about 2:1; from about 1.25:1 to about 2:1; from about 1.33:1 to about 2:1; from about 1.5:1 to about 2:1; from about 1.75 to about 2:1; 0.33:1 to about 1.5:1; from about 0.5:1 to about 1.5:1; from about 0.66:1 to about 1.5:1; from about 0.75:1 to about 1.5:1; from about 1:1 to about 1.5:1; from about 1.25:1 to about 1.5:1; from about 1.33:1 to about 1.5:1; from about 0.33:1 to about 1:1; from about 0.5:1 to about 1:1; from about 0.66:1 to about 1:1; from about 0.75:1 to about 1:1; or from about 0.4:1 to about 0.8:1.

In embodiments, the infusion stitching yarn constitutes from about 0.1 wt.% to about 10 wt.% of the shapeable fabric; from about 0.1 wt.% to about 5 wt.% of the shapeable fabric; from about 0.1 wt.% to about 3 wt.% of the shapeable fabric; from about 0.25 wt.% to about 15 wt.% of the shapeable fabric; from about 0.25 wt.% to about 10 wt.% of the shapeable fabric; from about 0.25 wt.% to about 5 wt.% of the shapeable fabric; from about 0.25 wt.% to about 3 wt.% of the shapeable fabric; from about 0.5 wt.% to about 15 wt.% of the shapeable fabric; from about 0.5 wt.% to about 10 wt.% of the shapeable fabric; from about 0.5 wt.% to about 5 wt.% of the shapeable fabric; or from about 0.5 wt.% to about 3 wt.% of the shapeable fabric.

In embodiments, the intermingled stitching yarn constitutes from about 0.25 wt.% to about 4 wt.% of the shapeable fabric; and/or the infusion stitching yarn constitutes from about 0.25 wt.% to about 4 wt.% of the shapeable fabric.

In embodiments, the shapeable fabric comprises:
first fibers comprising glass fibers oriented in a first direction;
second fibers comprising glass fibers oriented in a second direction;
an intermingled stitching yarn comprising a plurality of infusion filaments and a plurality of shaping filaments that are intermingled; and
an infusion stitching yarn;
wherein the second direction is within 0 to 90 degrees of the first direction,
wherein the infusion filament constitutes from about 50 wt.% to about 70 wt.% of the intermingled stitching yarn, and the shaping filament constitutes from about 30 wt.% to about 50 wt.% of the intermingled stitching yarn,
wherein the shaping filaments have a melting point of less than about 150 °C, and wherein the infusion filaments have a melting point of at least about 180 °C, and
wherein the intermingled stitching yarn and the infusion stitching yarn form a stitching pattern through the shapeable fabric and maintain the first and second fibers in their respective orientation.

In embodiments, the shapeable fabric comprises:
first fibers comprising glass fibers oriented in a first direction;
second fibers comprising glass fibers oriented in a second direction;
an intermingled stitching yarn comprising a plurality of infusion filaments and a plurality of shaping filaments that are intermingled; and
an infusion stitching yarn;
wherein the second direction is within 0 to 90 degrees of the first direction,
wherein the infusion filament constitutes from about 30 wt.% to about 70 wt.% of the intermingled stitching yarn, and the shaping filament constitutes from about 30 wt.% to about 70 wt.% of the intermingled stitching yarn,
wherein the shaping filaments have a melting point of less than about 150 °C, and wherein the infusion filaments have a melting point of at least about 180 °C, and
wherein the intermingled stitching yarn and the infusion stitching yarn form a stitching pattern through the shapeable fabric and maintain the first and second fibers in their respective orientation.

### Fabric stack

A fabric stack comprises at least two layers of a shapeable fabric as described herein.

In embodiments, a fabric stack comprises at least two layers of a shapeable fabric as described herein wherein one layer of shapeable fabric is directly disposed on another layer of shapeable fabric. In embodiments, the fabric stack comprises at least 3 layers of a shapeable fabric as described herein, for example at least 4 layers, at least 5 layers, at least 6 layers or at least 8 layers of a shapeable fabric as described herein. In embodiments, the fabric stack comprises up to 50 layers of a shapeable fabric as described herein, for example, up to 30 layers, up to 25 layers, up to 20 layers up to 15 layers, up to 10 layers of a shapeable fabric as described herein. In embodiments, the fabric stack comprises 2 to 50 layers of a shapeable fabric as described herein, for example 4 to 30 layers, or 6 to 25 layers of a shapeable fabric as described herein. In embodiments, the fabric stack comprises a plurality of layers of shapeable fabric as described herein, wherein the each of the plurality of layers of shapeable fabric is directly disposed on another of the plurality of layers of shapeable fabric.

In embodiments, the layers of the fabric stack are adhered to one another. A fabric stack in which layers of the fabric stack are adhered to one another may be referred to herein as a "consolidated fabric stack".

In embodiments, the layers of the fabric stack may be adhered to one another by a suitable treatment such as heating, curing, or exposure to UV radiation.

In embodiments, the layers of the fabric stack may be adhered to one another by heating the fabric stack such that the shaping filaments of the intermingled stitching yarn of a first layer of shapeable fabric adheres the first layer of shapeable fabric to a second layer of shapeable fabric.

In embodiments, the layers of the fabric stack may be adhered to one another by heating the fabric stack to a temperature of at least the melting point of the shaping filaments of the intermingled stitching yarn, for example to a temperature at least about 5 °C greater than the melting point of the shaping filaments of the intermingled stitching yarn, to a temperature at least about 10 °C greater than the melting point of the shaping filaments of the intermingled stitching yarn, or to a temperature at least about 15 °C greater than the shaping filaments of the intermingled stitching yarn. In embodiments, the layers of the fabric stack may be adhered to one another by heating the fabric stack to a temperature of at least about 60 °C, for example at least about 65 °C, at least about 70 °C, or at least about 80 °C. In embodiments, the layers of the fabric stack may be adhered to one another by heating the fabric stack to a temperature of up to about 150 °C, for example up to about 130 °C, up to about 120 °C, or up to about 100 °C. In embodiments, the layers of the fabric stack may be adhered to one another by heating the fabric stack to a temperature in the range of about 60 °C to about 120 °C, for example about 65 °C to about 100 °C. In embodiments, the layers of the fabric stack may be adhered to one another by heating the fabric stack as described above for about 1 minute or more, for example up to about 1 hour.

In embodiments, the consolidated fabric stack may be produced by heating the fabric stack under vacuum, for example heating the fabric stack at a pressure below atmospheric pressure, for example a pressure in the range of about 100 mbar to about 1000 mbar, or about 100 mbar to about 900 mbar, about 100 mbar to about 800 mbar, about 100 mbar to about 700 mbar, about 100 mbar to about 600 mbar, or about 100 mbar to about 400 mbar.

In embodiments, the fabric stack is exposed to increased temperature (i.e., heated) and/or reduced pressure for a time period of up to about 5 hours, for example up to about 3 hours, up to about 2 hours or up to about 1 hour to form a consolidated fabric stack.In embodiments, the fabric stack described herein may be impregnated with a resin and the resin cured to form a composite article. In embodiments, the resin may be a polyester resin. In embodiments, the resin may be an epoxy resin.

### Process for producing a shapeable fabric

In embodiments, a process for producing a shapeable fabric may comprise:
providing first fibers comprising glass fibers oriented in a first direction and second fibers comprising glass fibers oriented in a second direction, wherein the second direction is within 0 to 90 degrees of the first direction; and
stitching the first fibers and second fibers together using an intermingled stitching yarn, to form a stitching pattern through the shapeable fabric and to maintain the first and second fibers in their respective orientations,
the stitching yarn comprising a plurality of infusion filaments and a plurality of shaping filaments that are intermingled, wherein the shaping filaments have a melting point of less than about 150 °C, and the infusion filaments have a melting point of at least about 180 °C.

In embodiments, a process for producing a shapeable fabric may comprise:
providing first fibers comprising glass fibers oriented in a first direction and second fibers comprising glass fibers oriented in a second direction, wherein the second direction is within 0 to 90 degrees of the first direction; and
stitching the first fibers and second fibers together using an intermingled stitching yarn, to form a stitching pattern through the shapeable fabric and maintain the first and second fibers in their respective orientations, the intermingled stitching yarn comprising a plurality of infusion filaments and a plurality of shaping filaments that are intermingled, wherein the shaping filaments have a melting point of less than about 120 °C, and the infusion filaments have a melting point of at least about 200 °C, wherein the infusion filaments constitute from about 15 wt.% to about 85 wt.% of the intermingled stitching yarn, and the shaping filaments constitute from about 15 wt.% to about 85 wt.% of the intermingled stitching yarn.

In embodiments, stitching the first fibers and second fibers together using an intermingled stitching yarn comprises stitching the first fibers and second fibers together with a plurality of infusion filaments and a plurality of shaping filaments simultaneously, as the plurality of infusion filaments and the plurality of shaping filaments are intermingled.

In embodiments, stitching the first fibers and second fibers together comprises using an intermingled stitching yarn and an infusion stitching yarn simultaneously. In embodiments, the intermingled stitching yarn and the infusion stitching yarn may be stitched simultaneously to form a singular stitching pattern through the fabric. In embodiments, the intermingled stitching yarn and the infusion stitching yarn may be used to form different stitching patterns through the fabric.

### Shaped component

A shaped component comprises a fabric stack as described herein.

A shaped component may be produced by:
a) providing a fabric stack as described herein;
b) shaping the fabric stack; and
c) heating the shaped stack, for example at a temperature up to about 160 °C.

In embodiments, heating the fabric stack comprises heating the fabric stack at a temperature of at least about 50 °C, for example at least about 60 °C, at least about 70 °C, at least about 80 °C, at least about 90 °C, or at least about 100 °C. In embodiments, heating the fabric stack comprises heating the fabric stack at a temperature of up to about 160 °C, for example up to about 150 °C, or up to about 130 °C, or up to about 120 °C. In embodiments, heating the fabric stack comprises heating the fabric stack at a temperature in the range of about 50 °C to about 160 °C, for example about 50 °C to about 150 °C, about 70 °C to about 130 °C, or about 80 °C to about 120 °C.

In embodiments, producing a shaped component may comprise heating the fabric stack under vacuum, for example heating the fabric stack at a pressure below atmospheric pressure, for example a pressure in the range of about 100 mbar to about 1000 mbar, or about 100 mbar to about 900 mbar, about 100 mbar to about 800 mbar, about 100 mbar to about 700 mbar, about 100 mbar to about 600 mbar, or about 100 mbar to about 400 mbar.

In embodiments, producing a shaped component may comprise heating the fabric stack at a temperature up to about 160 °C, or up to about 150 °C under vacuum.

In embodiments, the fabric stack is exposed to increased temperature (i.e., heated) and/or reduced pressure for a time period of up to about 5 hours, for example up to about 3 hours, up to about 2 hours or up to about 1 hour to form a shaped article. In embodiments, the fabric stack is exposed to increased temperature (i.e., heated) and/or reduced pressure for a time period of at least about 10 mins, for example at least about 30 mins to form a shaped article. In embodiments, the fabric stack is exposed to increased temperature (i.e., heated) and/or reduced pressure for a time period of about 10 mins to about 5 hours, for example about 30 mins to about 2 hours, or about 30 mins to about 1 hour.

In embodiments, shaping the fabric stack involves placing the fabric stack over or in a mold. In embodiments, shaping the fabric stack involves placing the fabric stack over or in a mold and applying increased heat and/or reduced pressure to the fabric stack.

In embodiments, the shaped component described herein may be impregnated with a resin and the resin cured to form a composite article.

### Examples

The following illustrates examples of the fabrics and related aspects described herein. Thus, these examples should not be considered to restrict the present disclosure, but are merely in place to teach how to carry out the processes and obtain the products of the present disclosure.

### Intermingled stitching yarn

*Infusion filament -* a polyester infusion yarn (specifically polyethylene terephthalate) having a linear density of 76 dTex was employed to provide the plurality of infusion filaments in the intermingled stitching yarn employed in the following Examples. The polyester infusion yarn had a melting point in the range of 250-260 °C determined by differential scanning calorimetry as the temperature at which the polyester infusion yarn became entirely molten (i.e., the temperature of the peak heat flow obtained by DSC analysis). The melting point of the polyester infusion yarn was determined according to the EN ISO 11357-3:2018 test method by heating the polyester infusion yarn under an air flow of 80 mL/min at a heating rate of 10K/min, heating from - 60 °C to 300 °C and then holding for 5 mins at 300 °C before cooling from 300 °C to - 60 °C at a cooling rate of 10K/min and then holding for 5 mins at - 60 °C before heating from - 60 °C to 300 °C again at a heating rate of 10K/min and the melting point being determined as the value provided on the second heating cycle.

*Shaping filament -* a polyester shaping yarn (specifically a polycaprolactone yarn made up of 22 filaments, each filament having a diameter of 21 µm) having a linear density of 110 dTex and a melting point of approximately 60 °C (determined by differential scanning calorimetry as the temperature at which the polyester stitching yarn became entirely molten (i.e. the temperature of the peak heat flow obtained by DSC analysis)) was employed to provide the plurality of shaping filaments in the intermingled stitching yarn employed in the following Examples. The melting point of the polyester shaping yarn was determined according to the EN ISO 11357-3:2018 test method by heating the polyester shaping yarn under an air flow of 80 mL/min at a heating rate of 10K/min, heating from - 60 °C to 120 °C and then holding for 5 mins at 120 °C before cooling from 120 °C to - 60 °C at a cooling rate of 10K/min and then holding for 5 mins at - 60 °C before heating from - 60 °C to 120 °C again at a heating rate of 10K/min and the melting point being determined as the value provided on the second heating cycle.

The infusion filaments from the polyester infusion yarn and the filaments from the polyester shaping yarn were intermingled to form a single continuous intermingled stitching yarn. The polyester infusion yarn and polyester shaping yarn were fed into a yarn duct, such that the two yarns ran parallel to one another, the yarns were then exposed to an air jet. The air jet blended the infusion filaments from the polyester infusion yarn and the filaments from the polyester shaping yarn together at a filament level.

### Infusion stitching yarn

A polyester stitching yarn (specifically polyethylene terephthalate) having a linear density of 76 dTex was employed as the infusion stitching yarn in the following Examples. The polyester stitching yarn had a melting point in the range of 250-260 °C determined by differential scanning calorimetry as the temperature at which the polyester stitching yarn became entirely molten (i.e., the temperature of the peak heat flow obtained by DSC analysis). The melting point of the infusion stitching yarn was determined according to the EN ISO 11357-3:2018 test method by heating the infusion stitching yarn under an air flow of 80 mL/min at a heating rate of 10K/min, heating from - 60 °C to 300 °C and then holding for 5 mins at 300 °C before cooling from 300 °C to - 60 °C at a cooling rate of 10K/min and then holding for 5 mins at - 60 °C before heating from - 60 °C to 300 °C again at a heating rate of 10K/min and the melting point being determined as the value provided on the second heating cycle.

### Example 1

A shapeable unidirectional (UD) fabric was produced by providing a first layer consisting of first glass fibers oriented in the 0° direction (i.e., aligned with the length of the fabric) disposed on a second layer of second glass fibers oriented substantially perpendicular to the 0° direction (i.e., substantially perpendicular to the length of the fabric) and stitching the first fibers and second fibers together to maintain their respective orientation using an intermingled stitching yarn, and an infusion stitching yarn. The areal weight of the first fibers within the shapeable fabric was 1322 g/m² and the areal weight of the second fibers within the shapeable fabric was 75 g/m².

The intermingled stitching yarn consisted of a polyester infusion yarn and a polycaprolactone shaping yarn, as described above. The infusion stitching yarn consisted of a polyester stitching yarn as described above.

The first and second glass fibers were stitched together to maintain their respective orientations using the intermingled stitching yarn and the infusion stitching yarn simultaneously.

The plurality of infusion filaments constituted about 59 wt.% of the intermingled stitching yarn, and the plurality of shaping filaments constituted about 41 wt.% of the intermingled stitching yarn.

One thread of intermingled stitching yarn was used for one thread of infusion stitching yarn. The weight ratio of the intermingled stitching yarn and the infusion stitching yarn was 1:0.4.

A diamond stitch pattern with a gauge of 7 yarns per inch (1 inch = 2.54 cm) and a stitch length of 5 mm was used to stitch the first and second fibers together using the intermingled stitching yarn and infusion stitching yarn simultaneously.

### Example 2

A shapeable fabric was produced as described in Example 1, except that a stitch length of 4 mm was used to stitch the first and second fibers together using the intermingled stitching yarn and infusion stitching yarn simultaneously.

### Example 3

A shapeable fabric was produced as described in Example 1, except that a double tricot stitch pattern with a gauge of 7 yarns per inch (1 inch = 2.54 cm), and a stitch length of 6 mm was used to stitch the first and second fibers together using the intermingled stitching yarn and infusion stitching yarn simultaneously.

### Example 4

A shapeable fabric was produced as described in Example 1, except that the first fibers and the second fibers were stitched together to maintain their respective orientation using only an intermingled stitching yarn. No infusion stitching yarn was used. Furthermore, the plurality of infusion filaments constituted about 42 wt.% of the intermingled stitching yarn, and the plurality of shaping filaments constituted about 58 wt.% of the intermingled stitching yarn.

### Example 5

A shapeable fabric was produced as described in Example 4, except that a stitch length of 4 mm was used to stitch the first and second fibers together using the intermingled stitching yarn.

### Example 6

A shapeable fabric was produced as described in Example 4, except that a double tricot stitch pattern with a gauge of 7 yarns per inch (1 inch =2.54 cm), and a stitch length of 6 mm was used to stitch the first and second fibers together using the intermingled stitching yarn.

### Example 7 (not according to the invention)

A shapeable biaxial (BX) fabric was produced by providing a first layer consisting of first glass fibers oriented in a first direction, (e.g., orientated in the 45° direction(i.e., orientated in a direction 45° with respect to the length of the fabric) disposed on a second layer of second glass fibers oriented in a second direction being substantially perpendicular to the first direction to the first direction (i.e., orientated in the -45 ° direction), and stabilising fibers orientated in the 0° direction and the 90° direction. The layers were stitched together using a polycaprolactone shaping yarn, i.e., no stitching yarn comprising a polyester infusion yarn and a polycaprolactone shaping yarn was used and no infusion stitching yarn was used. The biaxial fabric had an areal weight of 1010 g/m².

A pillar stitch pattern with a gauge of 5 yarns per inch (1 inch = 2.54 cm) and a stitch length of 3 mm was used to stitch the first and second fibers together using the polycaprolactone shaping yarn.

### Example 8

A shapeable fabric was produced as described in Example 7, except that an intermingled stitching yarn was used to stitch the first and second fibers together instead of a polycaprolactone shaping yarn. The intermingled stitching yarn consisted of a polyester infusion yarn and a polycaprolactone shaping yarn as described above. The plurality of infusion filaments constituted about 42 wt.% of the intermingled stitching yarn, and the plurality of shaping filaments constituted about 58 wt.% of the intermingled stitching yarn.

### Example 9

A shapeable fabric was produced as described in Example 8, except that a tricot stitch pattern was used to stitch the first and second fibers together. The tricot stitch pattern has a gauge of 5 yarns per inch (1 inch = 2.54 cm), and a stitch length of 3 mm.

### Example 10

A shapeable fabric was produced as described in Example 8, except that a pillar stitch pattern with a gauge of 10 yarns per inch (1 inch = 2.54 cm) was used to stitch the first and second fibers together using the intermingled stitching yarn.

### Example 11 (not according to the invention)

A shapeable biaxial (BX) fabric was produced by providing a first layer consisting of first glass fibers oriented in a first direction, (e.g., orientated in the 45° direction (i.e., orientated in a direction 45° from the length of the fabric) disposed on a second layer of second glass fibers oriented in a second direction being substantially perpendicular to the first direction to the first direction (i.e., orientated in the -45 ° direction), and stabilising fibers orientated in the 0° direction and the 90° direction. The layers were stitched together using a separate polycaprolactone shaping yarn and a separate infusion stitching yarn simultaneously, i.e., no infusion stitching yarn was used. The biaxial fabric had an areal weight of 1010 g/m².

The weight ratio of the polycaprolactone shaping yarn to infusion stitching yarn was 1:0.35.

A pillar stitch pattern with a gauge of 5 yarns per inch (1 inch = 2.54 cm) and a stitch length of 3 mm was used to stitch the first and second fibers together using the infusion stitching yarn. A tricot stitch pattern with a gauge of 5 yarns per inch (1 inch = 2.54 cm) and a stitch length of 3 mm was used to stitch the first and second fibers together using the polycaprolactone shaping yarn.

### Comparative Example 1 (C. Ex. 1)

A standard unidirectional (UD) fabric was used as Comparative Example 1. The shapeable unidirectional (UD) fabric was produced by providing a first layer consisting of first glass fibers oriented in the 0° direction (i.e., aligned with the length of the fabric) disposed on a second layer of second glass fibers oriented substantially perpendicular to the 0° direction (i.e., substantially perpendicular to the length of the fabric) and stitching the first fibers and second fibers together to maintain their respective orientation using an infusion stitching yarn. The areal weight of the first fibers within the shapeable fabric was 1322 g/m² and the areal weight of the second fibers within the shapeable fabric was 75 g/m². No intermingled stitching yarn was utilised.

### Comparative Example 2 (C. Ex. 2)

A shapeable fabric was produced as described in Comparative Example 1, except that a shaping stitching yarn (a yarn formed of pure PCL as opposed to an intermingled yarn comprising intermingled shaping and infusion filaments), and an infusion stitching yarn (was used to stitch the first fibers and second fibers together to maintain their respective orientation.

A diamond stitch pattern with a stitch length of 4 mm was used to stitch the first and second fibers together using a separate polycaprolactone shaping yarn and a separate infusion stitching yarn simultaneously, i.e., no intermingled stitching yarn was used.

### Comparative Example 3 (C. Ex. 3)

A shapeable fabric was produced as described in Comparative Example 2, except that a diamond stitch pattern with a stitch length of 5 mm was used to stitch the first and second fibers together.

### Comparative Example 4 (C. Ex. 4)

A standard biaxial shapeable fabric was used as a comparative example. A shapeable biaxial (BX) fabric was produced by providing a first layer consisting of first glass fibers oriented in a first direction, (e.g., orientated in the 45° direction (i.e., orientated in a direction 45° from the length of the fabric) disposed on a second layer of second glass fibers oriented in a second direction being substantially perpendicular to the first direction to the first direction (i.e., orientated in the -45 ° direction), and stabilising fibers orientated in the 0° direction and the 90° direction. The layers were stitched together using an infusion stitching yarn. The biaxial fabric had an areal weight of 1010 g/m². No intermingled stitching yarn was utilised.

Table 1 below summarises the yarns employed in each example e.g., the weight of the infusion filaments and the weight of the shaping filaments used to form the intermingled stitching yarn, the weight of the intermingled stitching yarn used, the weight of the infusion stitching yarn used, and the weight of the pure shaping yarn used. As shown in Table 1, Examples 1 to 6 have a similar weight per area of infusion filaments, and the amount of shaping PCL filament is varied within the intermingled stitching yarn.

**Table 1**

| Example | Pure shaping PCL yarn (g/m²) | Infusion stitching yarn (g/m²) | Intermingled stitching yarn (g/m²) | Intermingled stitching yarn components | |
|---|---|---|---|---|---|
| | | | | Infusion PET filament (g/m²) | Shaping PCL filaments (g/m²) |
| Ex. 1 | 0 | 6.5 | 16.3 | 6.9 | 9.4 |
| Ex. 2 | 0 | 6.7 | 16.6 | 7 | 9.6 |
| Ex. 3 | 0 | 6.6 | 16.6 | 7 | 9.6 |
| Ex. 4 | 0 | 0 | 32.6 | 13.7 | 18.9 |
| Ex. 5 | 0 | 0 | 33.3 | 14.0 | 19.2 |
| Ex. 6 | 0 | 0 | 33.2 | 14.0 | 19.2 |
| Ex. 7 | 9.9 | 0 | 0 | 0 | 0 |
| Ex. 8 | 0 | 0 | 11.2 | 4.7 | 6.5 |
| Ex. 9 | 0 | 0 | 14.8 | 6.2 | 8.6 |
| Ex. 10 | 0 | 0 | 22.4 | 9.4 | 13.0 |
| Ex. 11 | 13.0 | 4.5 | 0 | 0 | 0 |

Table 2 summarises the parameters used to produce the shapeable fabrics, e.g., the type of fabric, the resin, the stitch pattern, the gauge, the stitch length, the amount of intermingled stitching yarn, the amount of infusion stitching yarn, and the amount of pure PCL shaping yarn used.

**Table 2**

| Example | Type of Fabric | Resin | Stitch Pattern | Gauge (yarns per inch) | Stitch length (mm) | Intermingled stitching yarn (%) (%) | Infusion stitching yarn (g/m²) | Pure shaping PCL Yarn (%) |
|---|---|---|---|---|---|---|---|---|
| Ex. 1 | UD | Polyester | Diamond stitch | 7 | 5 | 50 | 50 | / |
| Ex. 2 | UD | Polyester | Diamond stitch | 7 | 4 | 50 | 50 | / |
| Ex. 3 | UD | Polyester | Double tricot | 7 | 6 | 50 | 50 | / |
| Ex. 4 | UD | Polyester | Diamond stitch | 7 | 5 | 100 | 0 | / |
| Ex. 5 | UD | Polyester | Diamond stitch | 7 | 4 | 100 | 0 | / |
| Ex. 6 | UD | Polyester | Double tricot | 7 | 6 | 100 | 0 | / |
| Ex. 7 | BX | Epoxy | Pillar | 5 | 3 | 0 | 0 | 100 |
| Ex. 8 | BX | Epoxy | Pillar | 5 | 3 | 100 | 0 | / |
| Ex. 9 | BX | Epoxy | Tricot | 5 | 3 | 100 | 0 | / |
| Ex. 10 | BX | Epoxy | Pillar | 10 | 3 | 100 | 0 | / |
| Ex. 11 | BX | Epoxy | Tricot + pillar | 5 | 3 | 0 | 50 | 50 |

### Examples 1 to 11

### Infusion tests

The shapeable fabrics produced according to Examples 1 to 11 were formed into fabric stacks by stacking 5 layers. The fabrics stacks were consolidated by being placed under vacuum (pressure reduced by 0.6 bar) and heated for 1 hour at 65 °C. The consolidated fabric stacks were then cooled to room temperature and removed from the vacuum.

The cooled consolidated fabric stacks from Examples 1 to 6 were then infused with polyester resin under vacuum (pressure reduction of 0.6 bar) and the infusion speed was measured in the transversal direction (along the Y axis, i.e., a direction substantially perpendicular to the length of the fabric).

The cooled consolidated fabric stacks from Examples 7 to 11 were then infused with Epoxy resin under vacuum (pressure reduction of 0.6 bar) and the infusion speed was measured in the Y direction axis (, i.e., a direction substantially perpendicular to the length of the fabric).

### Examples 1 to 6 - Polyester Resin

The shapeable fabrics of Examples 1 to 6 were found to provide consolidated fabric stacks having acceptable infusion properties in the direction transverse to the UD direction (Y axis). The infusion properties of the shapeable fabrics of Examples 1 to 3 (fabrics containing only intermingled stitching yarn and infusion stitching yarn) were found to be improved compared to the shapeable fabrics produced according to Examples 4 to 6 (fabrics containing only intermingled stitching yarn and no infusion stitching yarn).

The shapeable fabrics of Examples 7 to 11 were found to provide consolidated fabric stacks having acceptable infusion properties in the Y axis direction(90 degrees from the stitching yarn). The infusion properties of the shapeable fabrics of Examples 8 to 11 were found to be improved compared to the shapeable fabrics produced according to Example 7 (fabrics containing only a shaping yarn without infusion filaments/infusion stitching yarn).

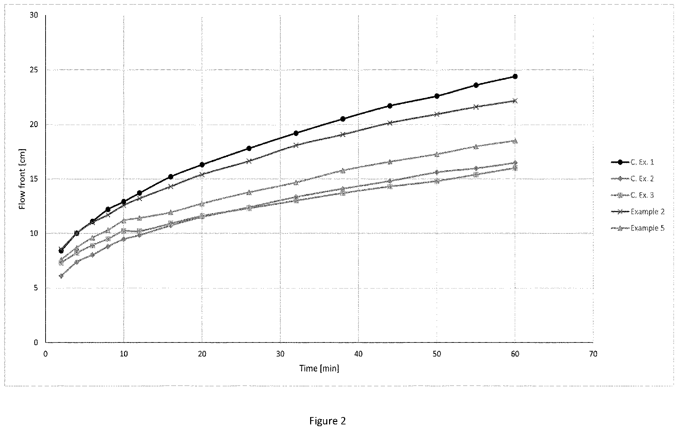

As the graph in Figure 2 shows, the use of an intermingled stitching yarn to provide shapeable fabrics described herein alongside an infusion stitching yarn with a diamond stitch pattern, such as in example 2, and use of solely an intermingled stitching yarn according to the present invention with a diamond stitch pattern, such as in example 5, provides a shapeable unidirectional fabric, with acceptable infusion properties.

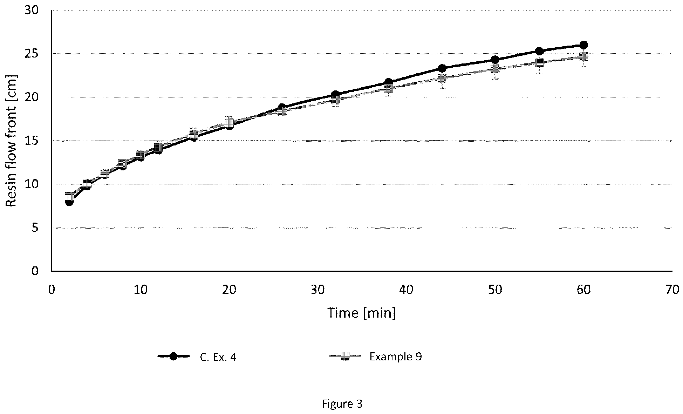

As the graph in Figure 3 shows, the use of an intermingled stitching yarn according to the present invention, with a tricot stitch pattern, such as in example 9, provides a shapeable biaxial fabric with the acceptable infusion properties.

### Shaping tests

The shapeable fabrics were then formed into fabric stacks by stacking 6 layers on a V-shape mold. The shaped stacks were heated at 65 °C for 1 hours, a different fabric stack formed for each of the shapable fabrics to form shaped components. The fabrics comprising intermingled stitching yarn as described herein were found to provide good shaping properties and maintained their shape after being removed from the mold.

### Mechanical Testing

Composite materials were produced from each of the fabrics produced according to Examples 2 and 9, and Comparative Examples 1-4. The shapeable fabrics were stacked into fabric stacks (4 layers of shapeable fabric), consolidated at 65 °C at a reduced pressure of 600 mbar and impregnated with polyester resin (Example 2, Comparative Examples 1, 2 and 3) or epoxy resin (Example 9 and Comparative Example 4). These composite materials were then subjected to mechanical testing and fatigue testing.

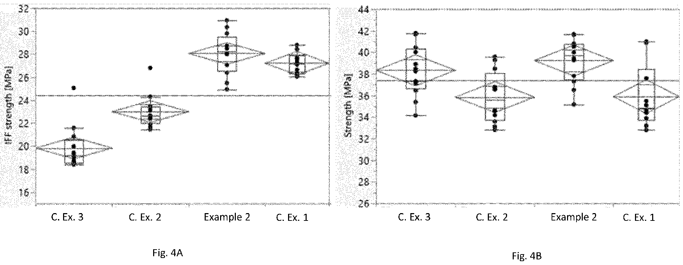

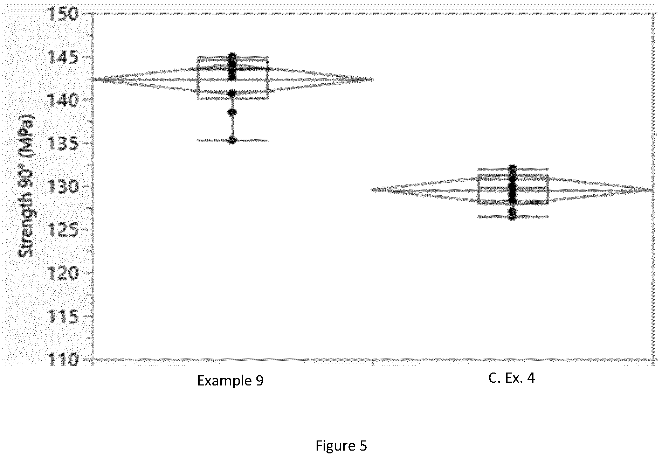

Tensile testing (perpendicular to the length of the fabric) was carried out according to ISO 527-5 to determine the inter fiber failure (IFF) strength and/or the maximum strength of the composite materials formed from the shapeable fabrics of Examples 2 and 9, and Comparative Examples 1-4. The results are provided in the graphs shown in Figures 4a, 4b and 5.

Example 2 showed comparable maximum strength compared to Comparative Examples 1-3. Example 2 showed improved inter fiber failure (IFF) strength compared to Comparative Examples 2 and 3, comparable IFF strength compared to Comparative Example 1. Example 9 showed improved maximum strength compared to Comparative Example 4.

The use of an intermingled stitching yarn according to the present invention is therefore favourable compared to employing a non-intermingled yarn.

### Fatigue Resistance

The fatigue properties discussed below can be determined under cyclic loading conditions with a test method performed according to ISO 13003:2003 or any other similar method.

The present inventors have also found that shapeable fabrics described herein, for example the shapeable fabrics of Example 2, can be incorporated into composite articles to produce composite articles having good fatigue resistance.

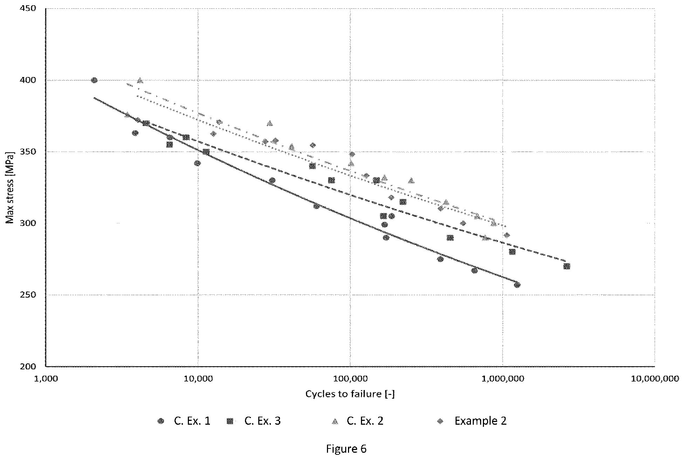

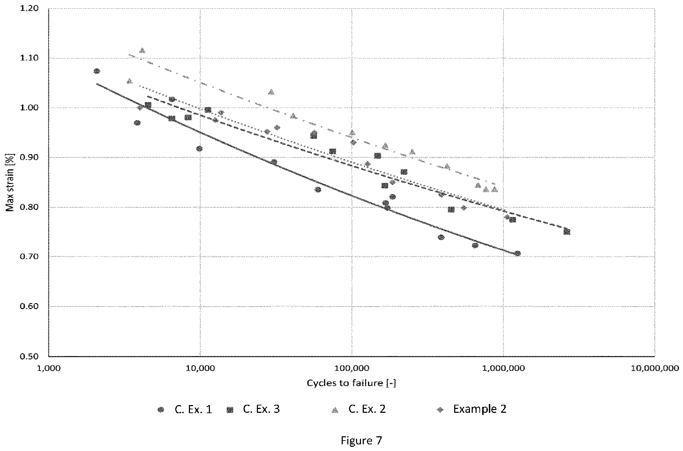

Composite articles formed from the shapeable fabrics of Example 2, Comparative Examples 1, 2 and 3 were subjected to fatigue testing and the results are provided in Figures 6 and 7. The shapeable fabrics of Example 2 and Comparative Examples 1, 2 and 3 were formed into fabric stacks as described above in relation to the infusion tests and impregnated with polyester resin as described above in relation to the infusion tests to form composite sheets. The composite sheets containing shapeable fabrics of the above-mentioned Examples underwent fatigue testing.

Example 2 was found to have a maximum strain in the range of from 0.8% for 1 million cycles and a maximum stress in the range of about 300 MPa for 1 million cycles. The results obtained by the inventors in relation to the maximum strain and stress of Example 2 also indicate (by the slope of the fatigue curve obtained from the results) that good fatigue performance is expected at even higher number of cycles.

The present inventors have surprisingly found that the fatigue resistance for composite articles comprising the shapeable fabrics described herein (i.e., the shapeable fabric of Example 2) exhibit much improved fatigue resistance compared to comparative composite materials containing standard comparative fabrics (i.e., fabrics such as those described in Comparative Example 1), for both maximum stress and maximum strain. The fatigue resistance for composite articles comprising the shapeable fabrics described herein, was found to be comparable to composite materials containing shapeable fabrics fabricated with separate infusion filaments and shaping filaments (i.e., fabrics such as those described in Comparative Examples 2 and 3).

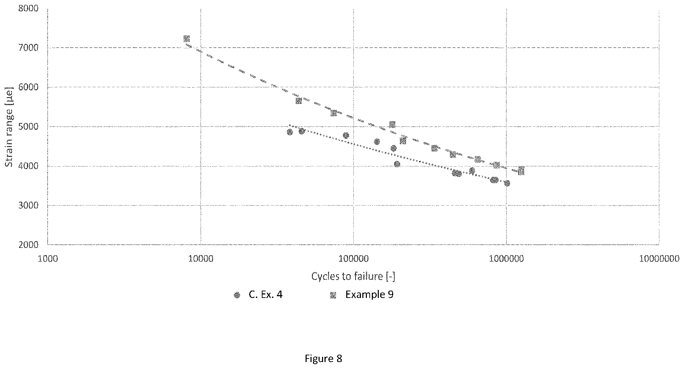

Composite articles formed from the shapeable fabrics of Example 9, and Comparative Example 4 were subjected to fatigue testing and the results are provided in Figure 8. The shapeable fabrics of Example 9, and Comparative Example 4 were formed into fabric stacks as described above in relation to the infusion tests and impregnated with epoxy resin as described above in relation to the infusion tests to form composite sheets. The composite sheets containing shapeable fabrics of the above-mentioned Examples underwent fatigue testing. Example 9 was found to have a strain range of from about 4000 µe for 1 million cycles. The results obtained by the inventors in relation to the strain range also indicated (by the slope of the fatigue curve obtained from the results) that excellent fatigue performance is expected at even higher number of cycles.

The present inventors have surprisingly found that the fatigue resistance for composite articles comprising the shapeable fabrics described herein (for example the shapeable fabric of Example 9) exhibit much improved fatigue resistance compared to comparative composite materials containing standard comparative fabrics (i.e., fabrics such as those described in Comparative Example 4).

Therefore, the present inventors have found that employing an intermingled stitching yarn comprising a plurality of infusion filaments and a plurality of shaping filaments intermingled, as described herein, provides shapeable fabrics exhibiting good infusion.

The intermingled arrangement of the plurality of infusion filaments and the plurality of shaping filaments was surprisingly found to aid infusion through the fabric. The improved infusion may be due to the homogenous distribution of the plurality of infusion filaments and the plurality of shaping filaments.

The use of an intermingled stitching yarn with the intermingled shaping filaments having a melting point of less than about 120 °C may be beneficial as it requires a reduced amount of energy, and so the manufacturing process may be improved.

Additionally, the inventors have found that the fabric stacks or shaped components described herein can be employed to remarkably improve lay-up speed of composite articles including the shaped components described herein. For example, shaped components comprising the shapeable fabrics described herein can be employed during wind turbine blade manufacture by incorporating a shaped component directly into a wind turbine blade during the lay-up procedure.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as defined by the claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

If a standard test is mentioned herein, unless otherwise stated, the version of the test to be referred to is the most recent at the time of filing this patent application.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A shapeable fabric comprising:
first fibers comprising glass fibers oriented in a first direction;
second fibers comprising glass fibers oriented in a second direction; and
a stitching yarn (1),
wherein the second direction is within 0 to 90 degrees of the first direction, and the stitching yarn (1) forms a stitching pattern through the shapeable fabric and maintains the first and second fibers in their respective orientations,
**characterised in that**
the stitching yarn (1) is an intermingled stitching yarn (1) comprising a plurality of infusion filaments (4) and a plurality of shaping filaments (2) that are intermingled,
wherein the shaping filaments (2) have a melting point of less than about 150 °C, and the infusion filaments (4) have a melting point of at least about 180 °C.

2. The shapeable fabric of claim 1, wherein the shaping filaments (2) have a melting point of less than about 100 °C.

3. The shapeable fabric of claims 1 or 2, wherein the infusion filaments (4) constitute from about 15 wt.% to about 85 wt.% of the intermingled stitching yarn (1), and the shaping filaments (2) constitute from about 15 wt.% to about 85 wt.% of the intermingled stitching yarn.

4. The shapeable fabric of any of the preceding claims, wherein the infusion filaments (4) constitute from about 25 wt.% to about 75 wt.% of the intermingled stitching yarn (1), and the shaping filaments (2) constitutes from about 25 wt.% to about 75 wt.% of the intermingled stitching yarn (1).

5. The shapeable fabric of any of the preceding claims, wherein the shaping filaments (2) are composed of polyester or polyamide.

6. The shapeable fabric of any of the preceding claims further comprising an infusion stitching yarn forming a stitching pattern through the shapeable fabric.

7. The shapeable fabric of claim 6, wherein the infusion stitching yarn is composed of a material having a melting point of at least about 180 °C.

8. The shapeable fabric of any of the preceding claims, wherein the shapeable fabric has an areal weight in the range of about 300 g/m² to about 2500 g/m².

9. The shapeable fabric of any of the preceding claims, wherein the intermingled stitching yarn constitutes from about 0.1 wt.% to about 20 wt.% of the shapeable fabric.

10. The shapeable fabric of any of the preceding claims, wherein the shaping filaments (2) of the intermingled stitching yarn (1) constitutes from about 0.25 wt.% to about 4 wt.% of the shapeable fabric; and/or the infusion filaments (4) of the intermingled stitching yarn (1) constitutes from about 0.25 wt.% to about 4 wt.% of the shapeable fabric.

11. A fabric stack comprising at least two layers of shapeable fabric according to any of claims 1 to 10, wherein one layer of shapeable fabric according to any of claims 1 to 10 is directly disposed on another layer of shapeable fabric according to any of claims 1 to 10.

12. A shaped component comprising a fabric stack according to claim 11.

13. A process for producing a shapeable fabric, the process comprising:
providing first fibers comprising glass fibers oriented in a first direction and second fibers comprising glass fibers oriented in a second direction, wherein the second direction is within 0 to 90 degrees of the first direction; and
stitching the first fibers and second fibers together using an intermingled stitching yarn (1) to form a stitching pattern through the shapeable fabric and to maintain the first and second fibers in their respective orientations, the intermingled stitching yarn comprising a plurality of infusion filaments (4) and a plurality of shaping filaments (2) that are intermingled, wherein the shaping filaments (2) have a melting point of less than about 150 °C, and the infusion filaments (4) have a melting point of at least about 180 °C.

14. A process for producing a shaped component, the process comprising:
stacking a plurality of layers of a shapeable fabric according to any of claims 1 to 10 to provide a fabric stack;
shaping the fabric stack; and
heating the fabric stack at a temperature up to about 160 °C.

15. A process according to claim 14, comprising heating the fabric stack at a temperature up to about 160 °C under vacuum.

## Patentansprüche

1. Formbarer Stoff, der Folgendes umfasst:
erste Fasern, die Glasfasern umfassen, die in eine erste Richtung ausgerichtet sind;
zweite Fasern, die Glasfasern umfassen, die in eine zweite Richtung ausgerichtet sind; und
ein Nähgarn (1),
wobei die zweite Richtung innerhalb von 0 bis 90 Grad der ersten Richtung ist und das Nähgarn (1) ein Nähmuster durch den formbaren Stoff bildet und die ersten und zweiten Fasern in ihren jeweiligen Ausrichtungen hält, **dadurch gekennzeichnet, dass** das Nähgarn (1) ein vermischtes Nähgarn (1) ist, das eine Vielzahl von Infusionsfilamenten (4) und eine Vielzahl von formgebenden Filamenten (2) umfasst, die vermischt sind,
wobei die formgebenden Filamente (2) einen Schmelzpunkt von weniger als etwa 150 °C haben und die Infusionsfilamente (4) einen Schmelzpunkt von mindestens etwa 180 °C haben.

2. Formbarer Stoff nach Anspruch 1, wobei die formgebenden Filamente (2) einen Schmelzpunkt von weniger als etwa 100 °C haben.

3. Formbarer Stoff nach Anspruch 1 oder 2, wobei die Infusionsfilamente (4) etwa 15 Gew.-% bis etwa 85 Gew.-% des vermischten Nähgarns (1) darstellen und die formgebenden Filamente (2) etwa 15 Gew.-% bis etwa 85 Gew.-% des vermischten Nähgarns darstellen.

4. Formbarer Stoff nach einem der vorhergehenden Ansprüche, wobei die Infusionsfilamente (4) etwa 25 Gew.-% bis etwa 75 Gew.-% des vermischten Nähgarns (1) darstellen und die formgebenden Filamente (2) etwa 25 Gew.-% bis etwa 75 Gew.-% des vermischten Nähgarns (1) darstellen.

5. Formbarer Stoff nach einem der vorhergehenden Ansprüche, wobei die formgebenden Filamente (2) aus Polyester oder Polyamid zusammengesetzt sind.

6. Der formbare Stoff nach einem der vorhergehenden Ansprüche umfasst ferner ein Infusionsnähgarn, das ein Nähmuster durch den formbaren Stoff bildet.

7. Formbarer Stoff nach Anspruch 6, wobei das Infusionsnähgarn aus einem Material zusammengesetzt ist, das einen Schmelzpunkt von mindestens etwa 180 °C hat.

8. Formbarer Stoff nach einem der vorhergehenden Ansprüche, wobei der formbare Stoff ein Flächengewicht in dem Bereich von etwa 300 g/m² bis etwa 2500 g/m² hat.

9. Formbarer Stoff nach einem der vorhergehenden Ansprüche, wobei das vermischte Nähgarn etwa 0,1 Gew.-% bis etwa 20 Gew.-% des formbaren Stoffs darstellt.

10. Formbarer Stoff nach einem der vorhergehenden Ansprüche, wobei die formgebenden Filamente (2) des vermischten Nähgarns (1) etwa 0,25 Gew.-% bis etwa 4 Gew.-% des formbaren Stoffs darstellen; und/oder die Infusionsfilamente (4) des vermischten Nähgarns (1) etwa 0,25 Gew.-% bis etwa 4 Gew.-% des formbaren Stoffs darstellen.

11. Stoffstapel, der mindestens zwei Schichten des formbaren Stoffs nach einem der Ansprüche 1 bis 10 umfasst, wobei eine Schicht des formbaren Stoffs nach einem der Ansprüche 1 bis 10 direkt auf einer anderen Schicht des formbaren Stoffs nach einem der Ansprüche 1 bis 10 angeordnet ist.

12. Geformte Komponente, die einen Stoffstapel nach Anspruch 11 umfasst.

13. Verfahren zum Herstellen eines formbaren Stoffs, wobei das Verfahren Folgendes umfasst:
Bereitstellen von ersten Fasern, die Glasfasern umfassen, die in einer ersten Richtung ausgerichtet sind, und zweiten Fasern, die Glasfasern umfassen, die in einer zweiten Richtung ausgerichtet sind, wobei die zweite Richtung innerhalb von 0 bis 90 Grad der ersten Richtung ist; und
Zusammennähen der ersten Fasern und zweiten Fasern mithilfe eines vermischten Nähgarns (1), um ein Nähmuster durch den formbaren Stoff zu bilden und die ersten und zweiten Fasern in ihren jeweiligen Ausrichtungen zu halten, wobei das vermischte Nähgarn eine Vielzahl von Infusionsfilamenten (4) und eine Vielzahl von formgebenden Filamenten (2) umfasst, die vermischt sind, wobei die formgebenden Filamente (2) einen Schmelzpunkt von weniger als etwa 150 °C haben und die Infusionsfilamente (4) einen Schmelzpunkt von mindestens etwa 180 °C haben.

14. Verfahren zum Herstellen einer geformten Komponente, wobei das Verfahren Folgendes umfasst:
Stapeln einer Vielzahl von Schichten eines formbaren Stoffs nach einem der Ansprüche 1 bis 10, um einen Stoffstapel bereitzustellen;
Formen des Stoffstapels; und
Erhitzen des Stoffstapels auf eine Temperatur von bis zu etwa 160 °C.

15. Verfahren nach Anspruch 14, das das Erhitzen des Stoffstapels auf eine Temperatur von bis zu etwa 160 °C unter Vakuum umfasst.

## Revendications

1. Tissu façonnable comprenant :
des premières fibres comprenant des fibres de verre orientées dans une première direction ;
des secondes fibres comprenant des fibres de verre orientées dans une seconde direction ; et
un fil de couture (1),
dans lequel la seconde direction est comprise entre 0 et 90 degrés par rapport à la première direction, et le fil de couture (1) forme un motif de couture à travers le tissu façonnable et maintient les première et seconde fibres dans leurs orientations respectives, **caractérisé en ce que** le fil de couture (1) est un fil de couture entremêlé (1) comprenant une pluralité de filaments d'infusion (4) et une pluralité de filaments de façonnage (2) qui sont entremêlés,
dans lequel les filaments de façonnage (2) ont un point de fusion inférieur à environ 150 °C, et les filaments d'infusion (4) ont un point de fusion d'au moins environ 180 °C.

2. Tissu façonnable selon la revendication 1, dans lequel les filaments de façonnage (2) ont un point de fusion inférieur à environ 100 °C.

3. Tissu façonnable selon les revendications 1 ou 2, dans lequel les filaments d'infusion (4) constituent d'environ 15 % en poids à environ 85 % en poids du fil de couture entremêlé (1), et les filaments de façonnage (2) constituent d'environ 15 % en poids à environ 85 % en poids du fil de couture entremêlé.

4. Tissu façonnable selon l'une quelconque des revendications précédentes, dans lequel les filaments d'infusion (4) constituent d'environ 25 % en poids à environ 75 % en poids du fil de couture entremêlé (1), et les filaments de façonnage (2) constituent d'environ 25 % en poids à environ 75 % en poids du fil de couture entremêlé (1).

5. Tissu façonnable selon l'une quelconque des revendications précédentes, dans lequel les filaments de façonnage (2) sont composés de polyester ou de polyamide.

6. Tissu façonnable selon l'une quelconque des revendications précédentes comprenant en outre un fil de couture d'infusion formant un motif de couture à travers le tissu façonnable.

7. Tissu façonnable selon la revendication 6, dans lequel le fil de couture d'infusion est composé d'un matériau ayant un point de fusion d'au moins environ 180 °C.

8. Tissu façonnable selon l'une quelconque des revendications précédentes, dans lequel le tissu façonnable a un poids surfacique dans la plage d'environ 300 g/m² à environ 2 500 g/m².

9. Tissu façonnable selon l'une quelconque des revendications précédentes, dans lequel le fil de couture entremêlé constitue d'environ 0,1 % en poids à environ 20 % en poids du tissu façonnable.

10. Tissu façonnable selon l'une quelconque des revendications précédentes, dans lequel les filaments de façonnage (2) du fil de couture entremêlé (1) constituent d'environ 0,25 % en poids à environ 4 % en poids du tissu façonnable ; et/ou les filaments d'infusion (4) du fil de couture entremêlé (1) constituent d'environ 0,25 % en poids à environ 4 % en poids du tissu façonnable.

11. Pile de tissus comprenant au moins deux couches de tissu façonnable selon l'une quelconque des revendications 1 à 10, dans laquelle une couche de tissu façonnable selon l'une quelconque des revendications 1 à 10 est disposée directement sur une autre couche de tissu façonnable selon l'une quelconque des revendications 1 à 10.

12. Composant façonné comprenant une pile de tissus selon la revendication 11.

13. Procédé de production d'un tissu façonnable, le procédé comprenant :
la fourniture des premières fibres comprenant des fibres de verre orientées dans une première direction et des secondes fibres comprenant des fibres de verre orientées dans une seconde direction, la seconde direction étant comprise entre 0 et 90 degrés par rapport à la première direction ; et
la couture des premières fibres et des secondes fibres ensemble à l'aide d'un fil de couture entremêlé (1) pour former un motif de couture à travers le tissu façonnable et pour maintenir les premières et secondes fibres dans leurs orientations respectives, le fil de couture entremêlé comprenant une pluralité de filaments d'infusion (4) et une pluralité de filaments de façonnage (2) qui sont entremêlés, dans lequel les filaments de façonnage (2) ont un point de fusion inférieur à environ 150 °C, et les filaments d'infusion (4) ont un point de fusion d'au moins environ 180 °C.

14. Procédé de production d'un composant façonné, le procédé comprenant :
l'empilement d'une pluralité de couches d'un tissu façonnable selon l'une quelconque des revendications 1 à 10 pour fournir une pile de tissus ;
le façonnage de la pile de tissus ; et
le chauffage de la pile de tissus à une température allant jusqu'à environ 160 °C.

15. Procédé selon la revendication 14, comprenant le chauffage de la pile de tissus à une température allant jusqu'à environ 160 °C sous vide.
